# EUROPÄISCHE PATENTSCHRIFT

(11) **EP 0 457 080 B1**
(45) Veröffentlichungstag und Bekanntmachung des Hinweises auf die Patenterteilung: **24.11.1993**
(21) Anmeldenummer: 91106746.0
(22) Anmeldetag: 26.04.1991
(51) Int. Cl.: F16B 13/10, F16B 13/00, E04F 11/02

(54) **Dübelbefestigung für Tragteile von Treppenstufen oder für ähnliche schwere Bauteile**
Dowel fixing for supporting members of steps or for similar heavy members
Fixation de cheville pour éléments porteurs de marches d'escalier ou pour éléments similaires de construction lourde

(30) Priorität: 12.05.1990 DE 4015278
(43) Veröffentlichungstag der Anmeldung: 21.11.1991
(73) Patentinhaber: Kenngott, Hans, D-74076 Heilbronn (DE)
(72) Erfinder: Kenngott, Hans-Dieter, W-7100 Heilbronn (DE); Rehm, Gallus, Prof. Dr.-Ing., Dr.-Ing. E.h., W-8000 München 60 (DE)
(74) Vertreter: Utermann, Gerd, Dipl.-Ing.

(56) Entgegenhaltungen:
- DE-A- 3 218 457

## Beschreibung

Die Erfindung betrifft eine Dübelbefestigung für Tragteile von Treppenstufen und sonstigen Treppenteilen oder für ähnliche schwere Bauteile und schwere Lasten an etwa vertikalen Wänden oder dgl. aus örtlich gering belastbaren Hohlkammersteinen mit folgenden Merkmalen:
- Ringsegment-Spannschalen bilden Ringzylinder-Spreizteile;
- durch axiales Verschieben von mit Schrägflächen versehenen Spannteilen sind die Ringsegment-Spannschalen auseinanderdrückbar;
- ein Spannbolzen durchdringt die Spannteile und den Freiraum zwischen den Ringsegment-Spannschalen;
- die Ringsegment-Spannschalen bestehen aus glasfaserverstärktem, spritzgegossenem Polyamid oder Metall-Druckguß und haben im Innern Längsrippen;
- die Ringsegment-Spannschalen weisen wenigstens eine eingeformte Querrippe auf;
- die Endteile der Ringsegment-Spannschalen haben Konusflächen, die in die stirnseitigen Konusflächen der Längsrippen übergehen, wobei diese Endflächen der Längsrippen eine Neigung aufweisen, die etwa dem Kegelwinkel der Schrägflächen der Spannteile entspricht;
- die mit Schrägflächen versehenen Spannteile bestehen aus spritzgegossenem Kunststoff oder Metall-Druckguß mit im wesentlichen gleichwandiger Ausbildung mit innerer Verrippung;
- der Dübel hat eine solche Länge, daß er den Außensteg, den ersten Hohlraum und wenigstens einen Teil des zweiten Steges von genormten Hohlkammersteinen durchdringt und eine solche geringfügig elastisch gestaltete Festigkeit, daß bei aufgebrachter Spannkraft nur eine aus dieser und/oder der Durchbiegung im Hohlraum resultierende zusätzliche Lochleibungskraft auftritt, die geringer ist, als die aus dem zulässigen Lochleibungsdruck der Stege der Hohlkammersteine resultierende Stützkraft und daß dazu der Außendurchmesser der Ringsegment-Spannschalen bei geschlossenem Ring mindestens ca. 35 mm beträgt und die Elastizität der Dübel-Außenteile ist derart bemessen, daß sie sich im Stützbereich vollflächig an die Lochwand anlegen.

Aus DE-OS 32 18 457 A1 ist eine Dübelbefestigung für Schwerlasten bekannt geworden, die der Trockenmontage vor allem von Treppen dient und für Hohlkammersteine eine geeignete Ausbildung derart vorschlägt, daß die Spannschalen von Schwerlastdübeln stets geeignet abgestützt sind und wobei die Ausbildung des Dübels so getroffen ist, daß die Leibungen der Löcher in den Stegen nicht ausbrechen. Diese Dübel müssen in ihrer Länge auf den jeweiligen Hohlkammerstein relativ genau abgestimmt sein. Sie haben sich bei geeigneter Abstimmung erstaunlich gut bewährt. In der Zwischenzeit hat die Zahl der verwendeten Hohlkammersteine jedoch stark zugenommen und es gibt Hohlkammersteine mit den unterschiedlichsten Abmessungen der Hohlräume und der Stege. Auch gibt es nicht nur die üblichen Hohlblocksteine, sondern auch Kalksand-Hohlsteine und viele Spezial-Hohlsteine. So steht der Verwender der Dübelbefestigung für die Trockenmontage von Schwerlasten, die auf Jahrzehnte mit absoluter Sicherheit befestigt werden müssen, sehr oft vor dem Problem, daß er nicht weiß, wo wohl die Stege in dem Mauerwerk liegen und welchen Innenaufbau der Stein hat, in den er einewn Dübel einzubringen hat. Außerdem erfordert die Fertigung unterschiedlicher langer Dübel und die Verwendung derselben einen erheblichen Herstellungs- und Bereitstellungsaufwand.

Der Erfindung liegt die Aufgabe zugrunde, eine Dübelbefestigung der eingangs genannten Art so auszugestalten, daß sie bei sehr stark unterschiedlichen Hohlkammersteinen mit relativ geringer Tragfähigkeit der Stege stets mit Sicherheit trägt, auch wenn die Enden der Ringsegment-Spannschalen sich nicht in einem Steg befinden.

Erfindungsgemäß ist vorgesehen,
daß
über die ganze Länge des Dübels ein mit einem längsverlaufenden Schlitz versehenes Kunststoff-Rohr vorgesehen ist, in dessen Innerem die Ringsegment-Spannschalen und die Spannteile angeordnet sind und dessen Elastizitäts- und Biege-Festigkeitswerte auf die vorgesehene Spreizung und geringfügige Verbiegung der Ringsegment- Spannschalen abgestimmt sind
und daß jede Ringsegment-Spannschale in Längsrichtung des Dübels betrachtet sich nur über einen kleinen Teil der Länge desselben erstreckt
und daß
wenigstens zwei Ringsegment-Spannschalen in dem Kunststoff-Rohr hintereinander angeordnet sind
und daß
außer den endseitigen Spannteilen zwischen den Ringsegment-Spannschalen Zwischenspannteile vorgesehen sind.

Dadurch daß man ein außen umschließendes, spreizfähiges Kunststoff-Rohr vorsieht und darin nicht nur einen Spannschalensatz, sondern wenigstens zwei hintereinander vorsieht, hat man einen kraftkontrolliert spannenden Dübel, der es auch bei über größere Mauerlochbereiche fehlender Abstützung am Außenumfang nicht zuläßt, daß Bereiche der Ringsegment-Spannschalen seitlich abkippen und damit keine axiale Spannkraft aufzunehmen gestatten. Da ferner auch an wenigstens einer Zwischenstelle Zwischenspannteile vorgesehen sind, so daß die Ringsegment-Spannschalen, nicht wie bei allen bisherigen Dübeln, nur am Anfang und Ende des Dübels auseinander gedrückt werden, sondern daß auch in Zwischenbereichen durch Keilwirkung auf die Ringsegment-Spannschalen eine ringförmige Auseinanderdrückkraft wirkt und daß diese durch das geschlitzte Rohr in Längsrichtung über einen gewissen Bereich übertragen wird, hat man die Gewähr, daß jeder vorhandene Steg im Hohlkammerstein von den Spannkräften erreicht wird und daß selbst bei Ausbrechen von kleinen Teilbereichen der Stege infolge unzulänglichen Bohrens oder Einbringens des Dübels die Spannteile nicht einfach in die Ringsegment-Spannschalen hineingezogen werden, ohne daß es einen äußeren Widerstand gibt. Nunmehr ist es nahezu gleichgültig an welcher Stelle - über die ganze Länge des Dübels betrachtet - die Stege des Hohlkammersteines sich befinden. Bisher mußte man zu jeder Dübelbefestigung die Länge des Dübels so auswählen, daß die Enden der Ringsegment-Spannschalen jeweils hinreichend tief in die Stege des jeweiligen Hohlkammersteines eingriffen. Dieser Sorge ist man nun enthoben und die Montageperson kann einen für die zu übertragenden Kräfte ausreichend langen Dübel für alle Befestigungen in Hohlkammersteinwänden benutzen, ohne darauf achten zu müssen, um welche Art Hohlkammerstein es sich handelt.

Für eine besonders zweckmäßige Ausgestaltung sieht man vor, daß zwei jeweils einen einfachen Dübel bildende Ringsegment-Spannschalen-Sätze mit zugeordneten konischen Spannteilen in ihren beiden Enden hintereinander liegend in einem durchgehenden, geschlitzten Kunststoff-Rohr angeordnet sind. So kann man die für die Schwerlastbefestigung in anderen als Hohlkammersteinen in großer Zahl preiswert zu fertigenden Dübel aus Kunststoff- und/oder Metall-Druckguß-Teilen auch für die Befestigung in allen Hohlkammersteinen benutzen. Entweder werden die zwei Dübel schon werkseitig in das Rohr gesteckt und mit dem Spannbolzen versehen. Andererseits kann die Montageperson jedoch vor Ort, wenn sie die Ringsegment-Spannschalen mit ihren Spannteilen, die Kunststoff-Rohre und die Spannbolzen vorrätig hat, nach Bedarf die mit dem kraftkontrolliert spannenden Kunststoff-Rohr gebildeten Dübel selbst zusammenstecken und einbauen. So läßt sich eine preiswert herzustellende, sicher und einfach zu montierende Trockenbefestigung für schwere Lasten, wie ganze Treppen, vorteilhaft realisieren. Das geschlitzte Kunststoff-Rohr besteht zweckmäßig aus Polyäthylen. Dieser Werkstoff ist eines Teils wesentlich preiswerter als das für die Ringsegment-Spannschalen und Spannteile zu verwendende glasfaserverstärkte Polyamid oder Metall-Druckguß, welche wegen ihrer Aufgabe im Gesamtzusammenhang der Befestigung wesentlich steifer sein müssen als das Kunststoff-Rohr. Andererseits kann man ihm besser die Elastizitätseigenschaften geben, die für das Spreizen und kraftkontrollierte Spannen erforderlich sind.

Die Außenflächen der Ringsegment-Spannschalen haben zweckmäßig Außenprofilierungen. Das Kunststoff-Rohr wird vorteilhafterweise innen mit passenden Profilierungen zur Verhinderung von Relativbewegungen zwischen Rohr und Ringsegment-Spannschalen bei Montage und Belastung versehen. Weiterhin versieht man auch die Außenfläche des Kunststoff-Rohres zweckmäßigerweise mit Verschiebungen und Verdrehungen verhindernden Profilierungen.

Die Ringsegment-Spannschalen werden zweckmäßig dreiteilig ausgebildet. Sie lassen sich dann einerseits gut fertigen und bieten andererseits die günstigsten Spannbedingungen bei optimierter Fertigung. Damit sie bei der Montage gut zusammenhalten und nicht weitere Halteteile erforderlich sind und andererseits gut in das Rohr eingeführt werden können, sind sie zweckmäßig über Sollbruchstellen miteinander verbunden. Da sie zweckmäßigerweise innerlich ohnehin Verstärkungsrippen aufweisen, kann man an den Konen der Spannteile zwischen die Rippen der Ringsegment-Spannschalen greifende Verdrehsicherungen vorsehen. So werden nicht nur die endseitigen Spannteile, sondern auch die innen liegenden Zwischenspannteile gegen Verdrehung mit gesichert und der ganze Dübel hat durchgängig eine einfach und sicher wirkende Verdrehsicherung.

Weitere Einzelheiten, Vorteile, Merkmale und Gesichtspunkte der Erfindung ergeben sich auch aus dem nachfolgenden, anhand der Zeichnungen abgehandelten Beschreibungsteil.

Ein Ausführungsbeispiel der Erfindung wird nachfolgend anhand der Zeichnungen erläutert.

Es zeigen:
- Fig. 1: Einen Vertikalschnitt durch eine Dübelbefestigung, bei der auf den verschiedenen Seiten des Kuststoff-Rohres unterschiedlich liegende Kammern und Stege angedeutet sind, wie sie beispielsweise bei verschiedenen Hohlkammersteinen vorkommen und wobei der obere Teil des Dübels geschnitten und der untere Teil in Ansicht auf die Ringsegment-Spannschalen und teilweise im Schnitt durch das Kunststoff-Rohr und teilweise in Ansicht auf das Kunststoff-Rohr dargestellt ist;
- Fig. 2: einen Vertikalschnitt längs der Linie 2-2 in Fig. 1 mit Ansicht auf die Enden der Ringsegment-Spannschalen;
- Fig. 3: einen Vertikalschnitt durch ein Spannteil längs der Linie 3-3 in Fig. 4;
- Fig. 4: eine Stirnansicht des Spannteiles nach Fig. 3.

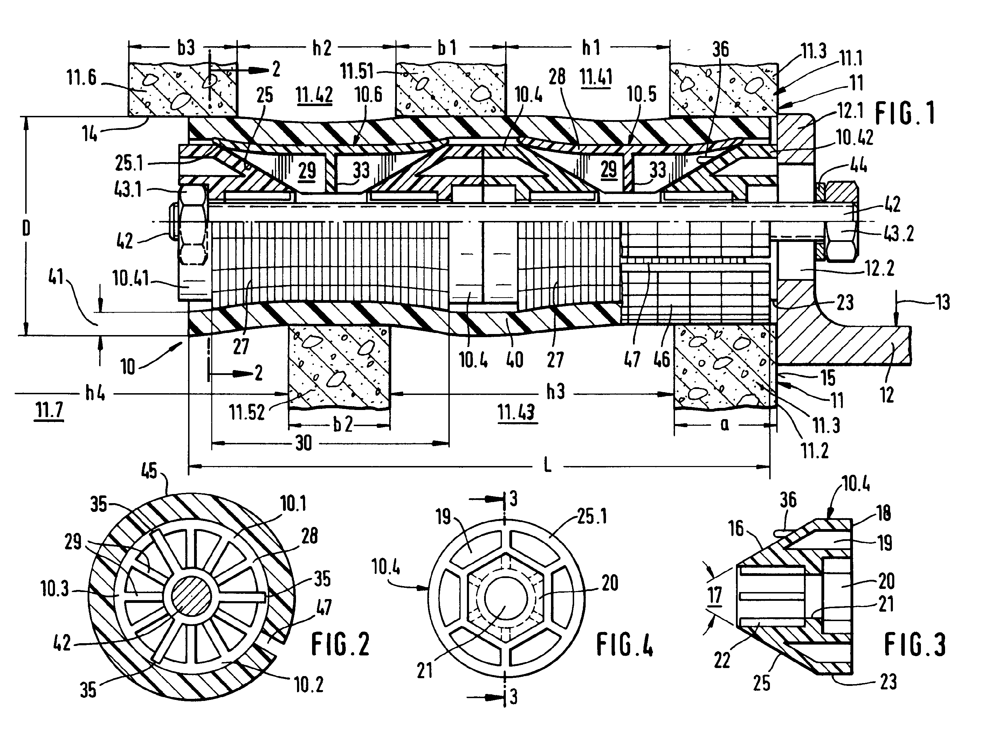

Die Fig. 1 zeigt eine Dübelbefestigung in Hohlkammersteinen 11.1 und 11.2 mit einem Dübel 10, an dem ein Auflagewinkel 12 für eine nicht dargestellte Treppenstufe befestigt ist, welche mit der durch den Pfeil 13 angedeuteten Last auf den Auflagewinkel 12 und die Dübelbefestigung wirkt.

Die Hohlkammersteine 11 bilden eine Wandfläche 15, an der der Schenkel 12.1 des Auflagewinkels 12 glatt anliegt. Diese mit mehreren Hohlkammersteinen gebildete Wandfläche 15 ist die Wandfläche einer Treppenhauswand und ist in üblicher Weise aufgebaut. Dabei sind zur Verdeutlichung des Einsatzes des Dübels in sehr unterschiedlichen Hohlkammersteinen im oberen Teil von Fig. 1 drei Stege eines ersten möglichen Hohlkammersteines 11.1 und im unteren Teil zwei Stege eines anderen Hohlkammersteines 11.2 mit sehr großen Hohlkammern angedeutet. Diese unterschiedlichen Hohlkammersteine treten naturgemäß nicht an einem Dübel auf, sondern es soll nur verdeutlicht werden, wie der erfindungsgemäße Dübel bei sehr unterschiedlichen Hohlkammersteinen eingesetzt werden und selbst bei großen freien Längen in den Hohlkammern sicher tragen kann.

Beide Hohlkammersteine 11.1 und 11.2 haben gleich ausgebildete und gleich liegende Außenstege 11.3. Diese bilden die Wandfläche 15 und haben eine Breite a. An den Außensteg 11.3 schließt sich einer erster Hohlraum 11.41 an, der beim Hohlkammerstein 11.1 im oberen Teil von Fig. 1 eine Breite h1 hat. Daneben liegt der zweite Steg 11.51 mit einer Breite b1. An diesen schließt sich der zweite Hohlraum 11.42 an mit einer Breite h2. Diesem folgt der dritte Steg 11.6 mit einer Breite b3. Im unteren Teil von Fig. 1 ist der Hohlraum 11.43 wesentlich breiter als der Hohlraum 11.41 in oberen Teil der Figur und hat die Breite h3. An den zweiten Steg 11.52 mit der Breite b2 schließt sich ein weiterer Hohlraum 11.7 mit einer Breite h4 an. dessen Begrenzung nicht mehr dargestellt ist. Der dritte Steg 11.6 kann bei dünnen Wänden von beispielsweise 17,5 cm Stärke bereits die gegenüberliegende Wandfläche begrenzen. Das durchgebohrte Loch kann dann verputzt sein. Die Bohrung 14 erstreckt sich durch alle dargestellten Stege. Sie wird in üblicher Weise mit einer Bohrkrone erstellt. In diese Bohrung 14 ist der Dübel 10 eingesetzt.

Der Dübel 10 hat außen ein sich über seine ganze Länge L erstreckendes Kunststoff-Rohr 40. Es hat eine Wandstärke 41 von beispielsweise ca. 5 mm. Bohrung 14 und Kunststoff-Rohr 40 haben einen Ausgangsdurchmesser D von beispielsweise ca. 50 mm. Die Länge L beträgt beispielsweise etwa 16,5 cm.

Das Kunststoff-Rohr 40 ist mit einem, vorzugsweise über seine ganze Länge durchgehenden Schlitz 47 (Fig. 2) versehen, so daß es den Spreizbewegungen und Verformungen folgen kann. Seine Werkstoffeigenschaften sind jedoch vor allem so zu bestimmen, daß es die ausreichende Steifigkeit zur kraftkontrollierten Spreizung hat und der unten abgehandelten Überbrückung dienen kann.

In dem Kunststoff-Rohr 40 befinden sich zwei Ringsegment-Zylinder 10.5 und 10.6 mit vier Spannteilen 10.4. Sie werden von einem Spannbolzen 42 durchdrungen, der zumindest an seinen Enden Gewinde aufweist und auf den Sechskantmuttern 43.1 und 43.2 aufgeschraubt sind, wobei die Mutter 43.2 sich über eine Unterlegscheibe 44 auf dem Wandschenkel 12.1 des Auflagewinkels 12 an den Rändern eines in diesen eingebrachten Langloches 12.2 abstützt.

Die Spannteile 10.4 sind mit etwa gleicher Wandstärke im Spritzgußverfahren aus glasfaserverstärktem Polyamid - wie in der DE-OS 32 18 457 beschrieben - oder aus einem geeigneten Metall im Druckgußverfahren hergestellt. Sie haben jeweils einen Außenkonus 16, der mit einer glatten Kegelmantelfläche gebildet ist. Der Kegelwinkel ist mit 17 angegeben. Von der Stirnseite 18 ragen im Außenbereich Hohlräume 19 in den Spannteil 10.4 hinein, so daß gleiche Wandstärken für die Fertigung gebildet sind. Zentral ist eine Aufnahmevertiefung 20 für eine Sechskantmutter mit geeigneten Außenabmessungen und geeigneter Tiefe gebildet. Hier ist eine M10-Sechskant-Mutter vorgesehen. Eine Zentralbohrung 21 hat im Bereich des Konus 16 nur noch sechs auf die Ecken der als Sechskant ausgebildeten Aufnahmevertiefung 20 weisende Rippen 22, mit denen das Spannteil 10.4 auf dem Spannbolzen 42 zentriert ist. Wie aus Fig. 1 links ersichtlich, liegt die Sechskantmutter 43.1 in der Aufnahmevertiefung 20 des endseitigen Spannteiles 10.41, während das andere endseitige Spannteile 10.42 bis zur Wandfläche 15 reicht, so daß es sich am Wandschenkel 12.1 des Auflagewinkels 12 abstützt. Hier ist keine Mutter eingelegt.

Die Ringsegment-Spannschalen 10.1 bis 10.3 jedes Ringsegment-Zylinders 10.5 bzw. 10.6 bilden eine zusammenhängende Einheit, die mit Sollbruchstellen 35 ausgestattet ist.

Die Ringsegment-Spannschalen 10.1, 10.2 und 10.3 jedes Ringsegment-Zylinders 10.5 bzw. 10.6 haben innen Konusflächen 25, die auf den Enden ihrer inneren Längsrippen 29 gebildet sind. Die Ringsegment-Zylinder 10.5 und 10.6 sind einstückig gefertigt und haben in ihrer Längsmitte innen eine Querrippe 33, bis zu der die einstückig eingeformten Längsrippen 29 reichen, so daß die Spritzguß-Werkzeuge von beiden Enden eingreifen können. Die Konusflächen 25 haben nur außen einen durchgehenden Ringbereich 25.1, dessen Wandstärke derjenigen der Teilzylinderwände 28 der Ringsegment-Spannschalen 10.1 bis 10.3 entspricht und der vorzugsweise mit gleichem Winkel in die Endflächen der Längsrippen 29 übergeht. Die Längsrippen 29 bilden zwischen sich einen Freiraum für den Durchtritt des Spannbolzens 42. Die relativ hohen Längsrippen 29 führen zu einer günstigen Biegefestigkeit der Ringsegment-Spannschalen 10.1 bis 10.3, die nach dem Auseinanderbrechen der Sollbruchstellen 35 beim Spreizen sich auch in den Endbereichen, wie schematisch angedeutet, je nach der äußeren Abstützung verformen können. Die gewölbeartige Ausbildung der Teilzylinderwände 28 der Ringsegment-Spannschalen 10.1 bis 10.3 ergibt günstige Steifigkeits- und Festigkeitseigenschaften, wozu die mittlere Querrippe wesentlich beiträgt. Anstelle von Konusflächen an den Enden der Längsrippen 29 können auch andere, den Keilverhältnissen beim Zusammendrücken entsprechende Keilflächenformen gewählt werden.

Alle Wandstärken der Außenwände, der Konusteile, Rippen und dgl. betragen etwa 1,5 bis 2 mm, wenn eine glasfaserverstärktes Polyamid verwendet wird. Es können jedoch auch geeignete Metall-Druckguß-Werkstoffe verwendet werden, soweit die notwendigen Verformungen realisierbar sind.

Beispielsweise könnte man die Spannteile 10.4 aus Metall und die Ringsegment-Spannschalen 10.1 bis 10.3 aus glasfaserverstärktem Kunststoff fertigen. Die Werkstoffe sind mit dem äußeren Kunststoff-Rohr 40 abzustimmen.

Zur Sicherung gegen Verdrehen der Bestandteile des Dübels 10 untereinander und gegenüber der Wand sind geeignete Maßnahmen zutreffen. Dafür steht aus der Konusfläche jedes Spannteile 10.4 wenigstens ein Fixierungszapfen 36 heraus. Sie greifen zwischen die Längsrippen 29 der Ringsegment-Spannschalen 10.1 bis 10.3. Die Ringsegment-Spannschalen 10.1 bis 10.3 haben auf ihren Aussenfächen 26 übliche Halteprofilierungen 27. Zur Verhinderung von Verschiebungen gegenüber dem Kunststoff-Rohr 40 ist dieses innen mit nicht dargestellten, gleichartigen Profilierungen versehen, sodaß die beiden Profilierungen ineinandergreifen. Zur Verhinderung des Verrutschens des Kunststoff-Rohres 40 in der Bohrung 14 in den Stegen der Hohlkammersteine 11 wird das Kunststoff-Rohr 40 auf seiner Außenfläche 45 ebenfalls mit geeigneten Profilierungen 46 versehen.

Wesentlich für die erfindungsgemäße Dübelbefestigung ist auch, daß die Ringsegment-Spannschalen 10.1 bis 10.3 nicht nur in den Endbereichen auseinandergedrückt werden, sondern daß auch noch in Zwischenbereichen Spannteile vorgesehen sind und die Ringsegment-Spannschalen 10.1 bis 10.3 sich deshalb nicht über die ganze Länge L des Dübels 10 bzw. des Kunststoff-Rohres 40 erstrecken, sondern nur eine Ringsegement-Spannschalen-Länge 30 aufweisen, die einen kleinen Teil derselben ausmacht. Bei einer Länge L von 160 mm beträgt die Ringsegment-Spannschalen-Länge 30 etwa 60 mm. Der Durchmesser des Zylinderschaftes 23 des Spannteiles 10.4 beträgt etwa 40 mm, seine Länge etwa 10 mm. So erreicht man auch, daß die weiter nach außen zu liegende Ringsegment-Spannschale immer mit Sicherheit etwas innerhalb der äußeren Wandfläche 15 liegt. Im vorliegenden Ausführungsbeispiel sind zwei komplette Innen-Dübel mit Ringsegment-Spannschalen und Spannteilen hintereinander liegend im Kunststoff-Rohr 40 eingebaut. Solche Dübel können ansonsten zu üblichen Schwerlastmontagen in der bekannten Weise verwendet werden. So kann man aus gleichen Werkzeugen mit geringem Fertigungs- und Lagerhaltungs-Aufwand auch die erfindungsgemäßen Dübel 10 nur durch Verwendung eines zusätzlichen geschlitzten Kunststoff-Rohres 40 aufbauen. Man kann auch mehr als zwei Innen-Dübel bzw Ringsegment-SpannschalenZylinder mit ihren Innenteilen hintereinander anordnen. Auch braucht man dazwischen nicht die endseitigen Spannteile zu verwenden, sondern kann im Innern spezielle Zwischenspannteile vorsehen. Die Verwendung von zwei Ringsegment-Spannschalen mit Längen von 60 mm ist jedoch zweckmäßig für alle derzeit in Betracht kommenden Hohlkammersteine, auch solche, die sehr große Hohlräume haben und beispielsweise aus Kalksandstein-Material gefertigt sind.

Durch die Verwendung eines außen liegenden, geschlitzten Kunststoff-Rohres 40 können nunmehr die Ringsegment-Spannschalen in keinem Falle soweit ausweichen, daß sich die Spannteile 10.4 ganz in sie hineinziehen würden, weil das Kunststoff-Rohr 40 immer irgendwo einen Halt findet und im übrigen ausreichen steif ist. Die unterschiedlich liegenden Stege in den beiden Teilen der Fig. 1 veranschaulichen, daß auch in Fällen, in denen die Enden der Ringsegment-Spannschalen überhaupt nicht mehr im Abstützbereich der Stege liegen, noch ein sehr guter Halt zustande kommt. Durch die große Länge L des Dübels 10 und die günstige Lage des inneren Steges 11.5 ist selbst in einem solchen Hohlkammerstein 11.2 noch die Befestigung einer Treppenstufe bei nicht allzu großer Last mit nur einem Dübel 10 möglich.

Die nachfolgend abgedruckte Zusammenfassung ist Bestandteil der Offenbarung der Erfindung:

Der Dübel (10) hat Ringsegment-Spannschalen (10.1, 10.2, 10.3), die von Spannteilen (10.4) auseinandergedrückt werden, wenn der Spannbolzen (42) mit Hilfe der Sechskant-Muttern (43.1, 43.2) angespannt wird. Ein über die Ringsegment-Spannschalen gestecktes Kunststoff-Rohr (40) verhindert, daß die Enden der Ringsegment-Spannschalen auseinanderklappen, wenn sie in Hohlräumen (11.41, 11.42) keinen Halt finden.

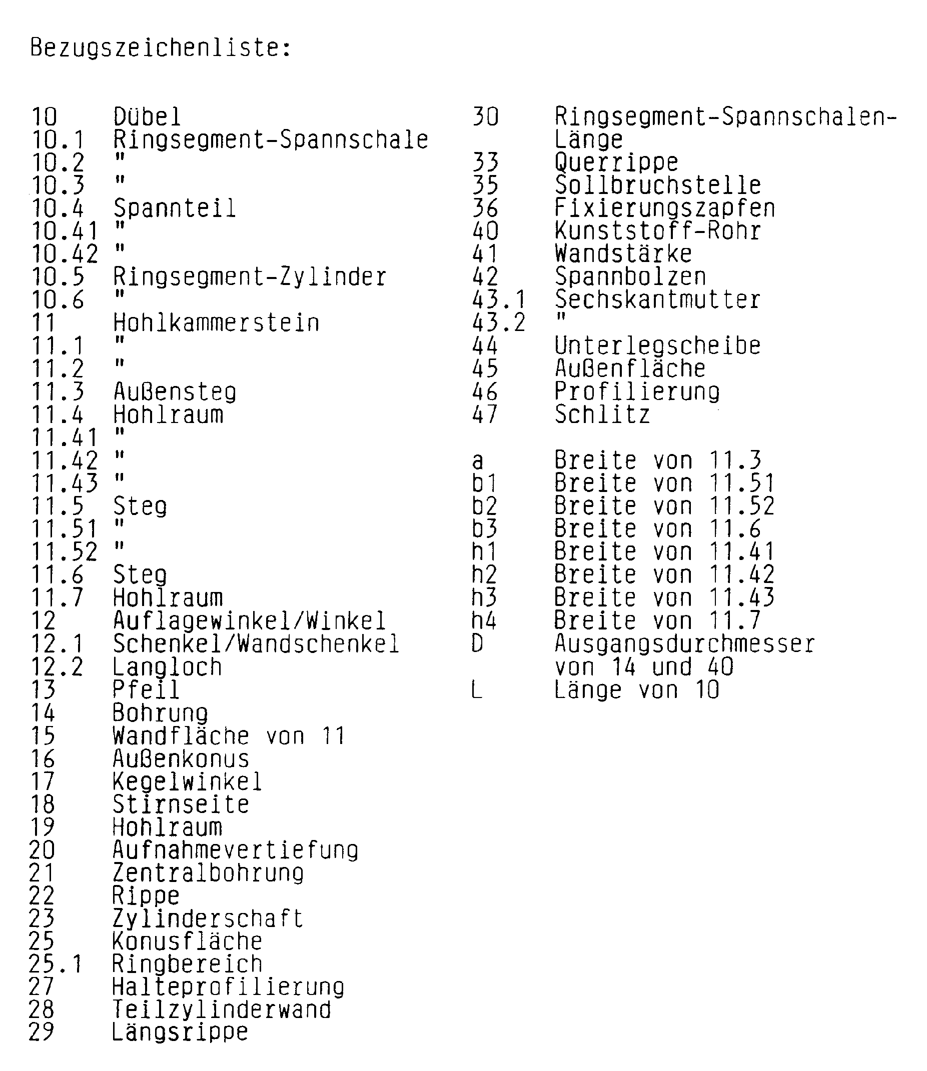

## Patentansprüche

1. Dübelbefestigung für Tragteile (12) von Treppenstufen und sonstigen Treppenteilen oder für ähnliche schwere Bauteile und schwere Lasten an etwa vertikalen Wänden (15) oder dgl. aus örtlich gering belastbaren Hohlkammersteinen (11) mit folgenden Merkmalen:
- Ringsegment-Spannschalen (10.1, 10.2, 10.3) bilden Ringzylinder-Spreizteile;
- durch axiales Verschieben von mit Schrägflächen (16) versehenen Spannteilen (10. 4) sind die Ringsegment-Spannschalen (10.1, 10.2, 10.3) auseinanderdrückbar;
- ein Spannbolzen (42) durchdringt die Spannteile (10.4) und den Freiraum zwischen den Ringsegment-Spannschalen (10.1, 10.2, 10.3);
- die Ringsegment-Spannschalen (10.1, 10.2, 10.3) bestehen aus glasfaserverstärktem, spritzgegossenem Polyamid oder Metall-Druckguß und haben im Innern Längsrippen (29);
- die Ringsegment-Spannschalen (10.1 bis 10.3) weisen wenigstens eine eingeformte Querrippe (33) auf;
- die Endteile der Ringsegment-Spannschalen (10.1 bis 10.3) haben Konusflächen, die in die stirnseitigen Konusflächen (25) der Längsrippen (29) übergehen, wobei diese Endflächen der Längsrippen (29) eine Neigung aufweisen, die etwa dem Kegelwinkel (17) der Schrägflächen (16) der Spannteile (10.4) entspricht;
- die mit Schrägflächen versehenen Spannteile (10.4) bestehen aus spritzgegossenem Kunststoff oder Metall-Druckguß mit im wesentlichen gleichwandiger Ausbildung mit innerer Verrippung;
- der Dübel (10) hat eine solche Länge (L), daß er den Außensteg (11.3), den ersten Hohlraum (11.41; 11.43) und wenigstens einen Teil des zweiten Steges (11.51; 11.52) von genormten Hohlkammersteinen (11, 11.1 , 11.2) durchdringt und eine solche geringfügig elastisch gestaltete Festigkeit, daß bei aufgebrachter Spannkraft nur eine aus dieser und/oder der Durchbiegung im Hohlraum resultierende zusätzliche Lochleibungskraft auftritt, die geringer ist, als die aus dem zulässigen Lochleibungsdruck der Stege (11.3, 11.51, 11.52, 11.6) der Hohlkammersteine (11, 11.1, 11.2) resultierende Stützkraft und daß dazu der Außendurchmesser der Ringsegment-Spannschalen (10.1, 10.2, 10.3) bei geschlossenem Ring mindestens ca. 35 mm beträgt und die Elastizität der Dübel-Außenteile ist derart bemessen, daß sie sich im Stützbereich vollflächig an die Lochwand anlegen;
**dadurch gekennzeichnet,**
daß
über die ganze Länge (L) des Dübels (10) ein mit einem längsverlaufenden Schlitz (47) versehenes Kunststoff-Rohr (40) vorgesehen ist, in dessen Innerem die Ringsegment-Spannschalen (10.1, 10.2, 10.3) und die Spannteile (10.4) angeordnet sind und dessen Elastizitäts- und Biege-Festigkeitswerte auf die vorgesehene Spreizung und geringfügige Verbiegung der Ringsegment-Spannschalen abgestimmt sind
und daß
jede Ringsegment-Spannschale in Längsrichtung des Dübels (10) betrachtet sich nur über einen kleinen Teil (30) der Länge (L) desselben erstreckt
und daß
wenigstens zwei Ringsegment-Spannschalen in dem Kunststoff-Rohr hintereinander angeordnet sind
und daß
außer den endseitigen Spannteilen (10.4) zwischen den Ringsegment-Spannschalen Zwischenspannteile (10.4) vorgesehen sind.

2. Dübelbefestigung nach Anspruch 1,
**dadurch gekennzeichnet,**
daß zwei jeweils einen einfachen Dübel bildende Ringsegment-Spannschalen-Sätze mit zugeordneten konischen Spannteilen an ihren beiden Enden hintereinander liegend in einem durchgehenden geschlitzten Kunststoff-Rohr (40) angeordnet sind.

3. Dübelbefestigung nach einem der vorhergehenden Ansprüche,
**dadurch gekennzeichnet,**
daß das Kunststoff-Rohr (40) an seiner Innenwand Profilierungen aufweist, in die die Profilierungen (27) der Außenwände der Ringsegment-Spannschalen (10.1 bis 10.3) eingreifen.

4. Dübelbefestigung nach einem der vorhergehenden Ansprüche,
**dadurch gekennzeichnet,**
daß das Kunststoff-Rohr (40) an seiner Außenwand (45) Profilierungen (46) aufweist.

5. Dübelbefestigung nach einem der vorhergehenden Ansprüche,
**dadurch gekennzeichnet,**
daß das Kunststoff-Rohr (40) aus Polyäthylen besteht.

6. Dübelbefestigung nach einem der vorhergehenden Ansprüche,
**dadurch gekennzeichnet,**
daß die Ringsegment-Spannschalen (10.1, 10.2, 10.3) dreiteilig ausgebildet sind.

7. Dübelbefestigung nach einem der vorhergehenden Ansprüche,
**dadurch gekennzeichnet,**
daß die Teilschalen über Sollbruchstellen (35) miteinander verbunden sind.

8. Dübelbefestigung nach einem der vorhergehenden Ansprüche,
**dadurch gekennzeichnet,**
daß die Konen (16) der Spannteile (10.4) zwischen die Rippen (29) der Ringsegment-Spannschalen (10.1 bis 10.4) greifende Verdrehsicherungen (36) aufweisen.

## Claims

1. A dowel fixing for supporting members (12) of steps and of other parts of steps or for similar heavy members and heavy loads on approximately vertical walls (15) or the like made of hollow chequer-bricks (11) which can be subjected, locally, to light loads, having the following features:
- annular-segment tension shells (10.1, 10.2, 10.3) form annular-cylinder expansion parts;
- by axial movement of tension parts (10.4) provided with sloping faces (16) the annular-segment tension shells (10.1, 10.2, 10.3) can be spread apart;
- a tension bolt (42) penetrates the tension parts (10.4) and the empty space between the annular-segment tension shells (10.1, 10.2, 10.3);
- the annular-segment tension shells (10.1, 10.2, 10.3) are made of glass fibre reinforced, injection-moulded polyamide or diecast metal and have longitudinal ribs (29) on the inside;
- the annular-segment tension shells (10.1 to 10.3) have at least one moulded transverse rib (33);
- the end parts of the annular-segment tension shells (10.1 to 10.3) have conical faces which go into the front-end conical faces (25) of the longitudinal ribs (29), said end faces of the longitudinal ribs (29) having a slope corresponding approximately to the cone angle (17) of the sloping faces (16) of the tension parts (10.4);
- the tension parts (10.4) provided with sloping faces are made of injection-moulded plastics or diecast metal with essentially identical-wall design with interior ribbing;
- the dowel (10) is of a length (L) such that it penetrates the outer web (11.3), the first cavity (11.41; 11.43) and at least a portion of the second web (11.51; 11.52) of standard hollow chequer-bricks (11, 11.1, 11.2) and is of a strength designed to be slightly elastic such that, when tension force is applied, there is only an additional force on the inside of the hole resulting from said tension force and/or the deflection in the cavity, said additional force being smaller than the bearing pressure resulting from the admissible pressure on the inside of the hole of the webs (11.3, 11.51, 11.52, 11.6) of the hollow chequer-bricks (11, 11.1, 11.2) and such that, for this purpose, the outside diameter of the annular-segment tension shells (10.1, 10.2, 10.3) with closed ring is at least approximately 35 mm and the elasticity of the outer parts of the dowel is adjusted such that, in the bearing area, said parts lay against the wall of the hole over their entire area;
**characterised in that,**
over the entire length (L) of the dowel (10), there is provided a plastic pipe (40) having a longitudinal slot (47), inside which pipe are positioned the annular-segment tension shells (10.1, 10.2, 10.3) and the tension parts (10.4), the elastic and flexural strength values of said pipe being adjusted to the envisaged expansion and slight bending of the annular-segment tension shells,
and in that
each annular-segment tension shell, viewed in the longitudinal direction of the dowel (10), extends only over a small portion (30) of the length (L) of the same,
and in that
at least two annular-segment tension shells are positioned one behind the other in the plastic pipe,
and in that,
apart from the end tension parts (10.4), intermediate tension parts (10.4) are provided between the annular-segment tension shells.

2. A dowel fixing as claimed in Claim 1,
**characterised in that**
two annular-segment tension shell assemblies, each forming a single dowel, with corresponding conical tension parts on both their ends are positioned one behind the other in a continuous slotted plastic pipe (40).

3. A dowel fixing as claimed in one of the preceding claims,
**characterised in that**
the plastic pipe (40) has, on its inside wall, profilings with which the profilings (27) of the outside walls of the annular-segment tension shells (10.1 to 10.3) engage.

4. A dowel fixing as claimed in one of the preceding claims,
**characterised in that**
the plastic pipe (40) has profilings (46) on its outside wall.

5. A dowel fixing as claimed in one of the preceding claims,
**characterised in that**
the plastic pipe (40) is made of polyethylene.

6. A dowel fixing as claimed in one of the preceding claims,
**characterised in that**
the annular-segment tension shells (10.1, 10.2, 10.3) are designed in three parts.

7. A dowel fixing as claimed in one of the preceding claims,
**characterised in that**
the part-shells are joined together by artificially weakened points (35).

8. A dowel fixing as claimed in one of the preceding claims,
**characterised in that**
the cones (16) of the tension parts (10.4) have anti-torsion devices (36) which grip between the ribs (29) of the annular-segment tension shells (10.1 to 10.4).

## Revendications

1. Fixation à cheville pour éléments porteurs (12) de marches d'escalier et autres éléments d'escalier ou pour éléments de construction lourds analogues et charges lourdes sur des murs (15) sensiblement verticaux ou analogues en briques creuses (11) localement faiblement sollicitables, comportant les caractéristiques suivantes:
- des coquilles de serrage en segment d'anneau (10.1, 10.2, 10.3) forment des parties d'expansion cylindriques annulaires;
- les coquilles de serrage en segment d'anneau (10.1, 10.2, 10.3) peuvent être écartées les unes des autres par déplacement axial de parties de serrage (10.4) munies de surfaces obliques (16);
- un goujon de serrage (42) traverse les parties de serrage (10.4) et l'espace libre situé entre les coquilles de serrage en segment d'anneau (10.1, 10.2, 10.3);
- les coquilles de serrage en segment d'anneau (10.1, 10.2, 10.3) consistent en polyamide renforcé par des fibres de verre et injecté ou en métal coulé sous pression et comportent à l'intérieur des nervures longitudinales (29);
- les coquilles de serrage en segment d'anneau (10.1 à 10.3) comportent au moins une nervure transversale (33) venue de moulage à l'intérieur ;
- les parties extrêmes des coquilles de serrage en segment d'anneau (10.1 à 10.3) comportent des surfaces coniques qui se prolongent dans les surfaces coniques frontales (25) des nervures longitudinales (29), ces surfaces extrêmes des nervures longitudinales (29) présentant une inclinaison qui correspond sensiblement à l'angle de cône (17) des surfaces obliques (16) des parties de serrage (10.4);
- les parties de serrage (10.4) munies de surfaces obliques consistent en matière plastique injectée ou en métal coulé sous pression ayant une configuration à parois sensiblement uniformes et à nervurage interne ;
- la cheville (10) a une longueur (L) telle qu'elle traverse l'âme externe (11.3), la première cavité (11.41 ;11.43) et au moins une partie de la seconde âme (11.51 ; 11.52) de briques creuses normalisées (11, 11.1, 11.2) et une résistance mécanique à faible élasticité telle que lors de l'application d'une force de serrage il n'apparaît qu'une force diamétrale supplémentaire resultant de celle-ci et/ou de la flexion dans la cavité qui est plus faible que la force d'appui résultant de la pression diamétrale admissible des âmes (11.3, 11.51, 11.52, 11.6) des briques creuses (11, 11.1, 11.2) et qu'à cet effet le diamètre exteme des coquilles de serrage en segment d'anneau (10.1, 10.2, 10.3) est d'au moins environ 35 mm lorsque l'anneau est fermé et l'élasticité des parties externes de la cheville est ajustée de telle manière qu'elles s'appuient suivant toute leur surface sur la paroi du trou dans le domaine d'appui;
caractérisée en ce que
sur toute la longueur L de la cheville (10) il est prévu un tube de matière plastique (40) muni d'une fente longitudinale (47) à l'intérieur duquel sont disposées les coquilles de serrage en segment d'anneau (10.1, 10.2, 10.3) et les parties de serrage (10.4) et dont les valeurs d'élasticité et de résistance mécanique en flexion sont ajustées en fonction de l'expansion prévue et de la faible flexion des coquilles de serrage en segment d'anneau, et en ce que
chaque coquille de serrage en segment d'anneau, vue dans la direction longitudinale de la cheville (10), ne s'étend que sur une petite partie (30) de la longueur L de celle-ci, et en ce que
au moins deux coquilles de serrage en segment d'anneau sont disposées l'une derrière l'autre dans le tube de matière plastique, et en ce que outre les parties de serrage terminales (10.4) il est prévu des parties de serrage intermédiaires (10.4) entre les coquilles de serrage en segment d'anneau.

2. Fixation à cheville selon la revendication 1, caractérisée en ce que deux jeux de coquilles de serrage en segment d'anneau formant chacun une cheville simple sont disposés l'un derrière l'autre avec des parties de serrage coniques associées à leurs deux extrémités dans un tube de matière plastique (40) à fente continue.

3. Fixation à cheville selon l'une des revendications précédentes, caractérisée en ce que le tube de matière plastique (40) présente sur sa paroi interne des profilages dans lesquels pénètrent les profilages (27) des parois externes des coquilles de serrage en segment d'anneau (10.1) à (10.3).

4. Fixation à cheville selon l'une des revendications précédentes, caractérisée en ce que le tube de matière plastique (40) présente des profilages (46) sur sa paroi externe (45).

5. Fixation à cheville selon l'une des revendications précédentes, caractérisée en ce que le tube de matière plastique (40) est en polyéthylène.

6. Fixation à cheville selon l'une des revendications précédentes, caractérisée en ce que les coquilles de serrage en segment d'anneau (10.1, 10.2, 10.3) sont en trois parties.

7. Fixation à cheville selon l'une des revendications précédentes, caractérisée en ce que les coquilles partielles sont reliées entre elles par des points destinés à la rupture (35).

8. Fixation à cheville selon l'une des revendications précédentes, caractérisée en ce que les cônes (16) des parties de serrage (10.4) présentent des elements antirotation (36) qui pénètrent entre les nervures (29) des coquilles de serrage en segment d'anneau (10.1 à 10.3).
